# EUROPEAN PATENT APPLICATION

(11) **EP 4 435 567 A1**
(43) Date of publication of application: **25.09.2024**
(21) Application number: 24162002.0
(22) Date of filing: 07.03.2024
(51) Int. Cl.: G06F 3/01

(54) **WIRELESS DEVICE CONTROL WITH UWB-ENABLED POINT-COMMAND**

(30) Priority: 16.03.2023 US 202318122684
(71) Applicant: NXP B.V., 5656 AG Eindhoven (NL)
(72) Inventor: Lehment, Nicolas Harmen, 5656AG Eindhoven (NL); Fernau, Loïc Fredric, 5656AG Eindhoven (NL); Püttjer, Leonard Clemens, 5656AG Eindhoven (NL)
(74) Representative: Miles, John Richard

(57) **Abstract**

A user device includes UWB antennas and a signal processing unit connected to the UWB antennas. The signal processing unit is configured to trigger a point-command operation in response to an input to the user device from a user of the user device, pair with a targeted device after the point-command operation is triggered, wherein pairing with the targeted device involves determining that the user device is pointed at the targeted device based on an AoA of UWB pings that are received from the targeted device on the UWB antennas of the user device, interpret a user generated point-command that is received at the user device from the user to produce a machine-readable point-command, wherein the user generated point-command is interpreted at least in part based on the pairing with the targeted device, and transmit the machine-readable point-command from the user device to the targeted device via a wireless signal.

## Description

### BACKGROUND

Ultra-wideband (UWB) technology can be used to implement localization applications on wireless devices. For example, a wireless device with more than one receive antenna can use ranging and angle-of-arrival (AoA) estimation to provide accurate relative position information, e.g., for indoor localization. Although UWB technology has been used to implement localization applications, with a growing array of connected devices, localization applications alone may not support desirable interactions between devices.

### SUMMARY

Embodiments of systems and methods for wireless device control are disclosed. In an embodiment, a user device includes UWB antennas and a signal processing unit connected to the UWB antennas and that includes processing circuitry and memory coupled to the processing circuitry, wherein the signal processing unit is configured to trigger a point-command operation in response to an input to the user device from a user of the user device, pair with a targeted device after the point-command operation is triggered, wherein pairing with the targeted device involves determining that the user device is pointed at the targeted device based on an AoA of UWB pings that are received from the targeted device on the UWB antennas of the user device, interpret a user generated point-command that is received at the user device from the user to produce a machine-readable point-command, wherein the user generated point-command is interpreted at least in part based on the pairing with the targeted device, and transmit the machine-readable point-command from the user device to the targeted device via a wireless signal.

In an embodiment, the user generated point-command is received at a microphone of the user device as a spoken command from the user.

In an embodiment, the spoken command is received at the microphone of the user device while the user device is pointed at the targeted device.

In an embodiment, pairing with the targeted device involves triggering the targeted device to transmit the UWB pings.

In an embodiment, pairing with the targeted device involves determining a type of the targeted device based on a wireless communication from the targeted device.

In an embodiment, pairing with the targeted device involves selecting the targeted device from a plurality of UWB-enabled devices that are transmitting UWB pings and that are within a pointing zone of the user device.

In an embodiment, pairing with the targeted device involves toggling a user interface of the user device through the plurality of UWB-enabled devices until the targeted device is selected.

In an embodiment, pairing with the targeted device involves toggling through visual indicators at the plurality of UWB-enabled devices until the targeted device is selected by the user via an input to the user device while a visual indicator is output from the targeted device.

In an embodiment, pairing with the targeted device involves determining a device type of the targeted device, and interpreting the user generated point-command involves selecting a command interpretation library in response to the device type of the targeted device.

In an embodiment, the device type of the targeted device is determined based on a non-UWB wireless communication from the targeted device.

In an embodiment, the command interpretation library is selected from a library of machine-learning models that are trained to predict point-commands from the user generated point-commands that are received at the user device.

In an embodiment, further including the user device guiding the user toward the targeted device.

In an embodiment, the user device guides the user to the targeted device using AoA information and haptic feedback.

In an embodiment, the user device is a smartwatch and a pointing zone of the smartwatch is in line with a point finger of a hand of the user, wherein the smartwatch is worn on the same wrist as the hand.

An embodiment of an integrated circuit device is also disclosed. The integrated circuit device includes a signal processing unit that includes processing circuitry and memory coupled to the processing circuitry, wherein the signal processing unit is configured to trigger a point-command operation in response to an input to the integrated circuit device from a user of a user device, pair with a targeted device after the point-command operation is triggered, wherein pairing with the targeted device involves determining that the user device is pointed at the targeted device based on an AoA of UWB pings that are received on UWB antennas of the user device from the targeted device, interpret a user generated point-command that is received at the user device from the user to produce a machine-readable point-command, wherein the user generated point-command is interpreted at least in part based on the pairing with the targeted device, and output the machine-readable point-command for transmission to the targeted device via a wireless signal.

An embodiment of a method for controlling a device that is equipped with UWB is disclosed. The method involves triggering a point-command operation in response to an input to a user device from a user of the user device, pairing with a targeted device after the point-command operation is triggered, wherein pairing with the targeted device involves determining that the user device is pointed at the targeted device based on an AoA of UWB pings that are received from the targeted device on UWB antennas of the user device, interpreting a user generated point-command that is received at the user device from the user to produce a machine-readable point-command, wherein the user generated point-command is interpreted at least in part based on the pairing with the targeted device, and transmitting the machine-readable point-command from the user device to the targeted device via a wireless signal.

In an embodiment, the user generated point-command is received at a microphone of the user device as a spoken command from the user.

In an embodiment, the spoken command is received at the microphone of the user device while the user device is pointed at the targeted device.

In an embodiment, pairing with the targeted device involves triggering the targeted device to transmit the UWB pings.

In an embodiment, pairing with the targeted device involves determining a type of the targeted device based on a wireless communication from the targeted device.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 illustrates how a user device can be used to control another device using a combination of a voice command and UWB localization technology.
Fig. 2A is an example of a smartwatch.
Fig. 2B is a functional block diagram of electronic components of the smartwatch of Fig. 2A.
Fig. 2C depicts a top view of the smartwatch that shows example locations of the two UWB antennas within the case.
Fig. 2D depicts a side view of the smartwatch from Fig. 2C that shows the locations of the same two UWB antennas within the case from a side perspective.
Fig. 3A illustrates an input to the smartwatch that is implemented by twisting the wrist on which the smartwatch is worn.
Fig. 3B illustrates a twist input to the smartwatch that is implemented simultaneous with the user's hand pointing at the targeted device.
Fig. 4 illustrates the user's hand pointing at a targeted device, by pointing a finger at the light fixture, in which the finger is of the hand and corresponding wrist on which the smartwatch is worn.
Fig. 5 illustrates the UWB-enabled devices that are nearby to the smartwatch transmitting UWB pings as part of the pairing operation.
Fig. 6A illustrates an example of a pointing zone for a smartwatch that is to be worn on the left arm/wrist of the user.
Fig. 6B illustrates a pre-established pointing zone of the smartwatch relative to the left hand of a user in which the user is pointing with the index finger of the left hand.
Fig. 6C illustrates that device A is located within the pointing zone of the smartwatch.
Fig. 7 illustrates device-specific information that is transmitted from the targeted device and received at the smartwatch after the smartwatch is paired with the targeted device.
Fig. 8 depicts a process for producing a machine-readable point-command from a user generated point-command and from device-specific information that corresponds to the targeted device that is being pointed at by the wearer of the smartwatch.
Fig. 9 illustrates the machine-readable point-command being wirelessly transmitted from the smartwatch to the targeted device.
Fig. 10 illustrates two UWB-enabled devices that are both within the pointing zone of a smartwatch.
Fig. 11 illustrates a user input that allows the user to toggle through the two UWB-enabled devices that are within the pointing zone.
Fig. 12 illustrates that the user has toggled from the light fixture to the door and selected the door as the device that the user is pointing at and intends to control.
Fig. 13 is a process flow diagram of example logic that is implemented by the smartwatch to decipher the intent of a user's pointing when multiple UWB-enabled devices are within the same pointing zone.
Fig. 14 illustrates a smartwatch as described above relative to a UWB-enabled device in which the AoA between the smartwatch and the UWB-enabled device is shown.
Fig. 15 depicts two phases of a journey of a user towards a POI such as the handle of a refrigerator, in which the haptic feedback from the smartwatch is adjusted depending on smartwatch orientation.
Fig. 16 illustrates directional haptic indicators that can be produced by the smartwatch.
Fig. 17 illustrates directional haptic indicators that can be produced by the smartwatch.
Fig. 18 illustrates orientation haptic indicators that can be produced by the smartwatch.
Fig. 19 illustrates orientation haptic indicators that can be produced by the smartwatch.
Fig. 20 illustrates and example of a smartwatch that includes three UWB-enabled antennas.
Fig. 21 depicts an example of a UWB-enabled device that can implement the technique for wireless point-command as described above.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

Techniques for controlling a device are described herein. For example, the techniques involve pointing at a device and speaking a command to control the device. In one embodiment, a smartwatch of the user figures out what is being pointed at, interprets the voice command to produce a machine-readable command and negotiates authorization of the command with the device. The machine-readable command is then wirelessly transmitted to the device to control the device. Such a technique can reduce the cost of smart devices by moving voice recognition to a single device worn at the wrist, can improve command recognition by ensuring voice is recorded close to user (e.g., at the wrist), can work without a central smart home hub, can work in public spaces, allowing people to, for example, summon elevators without needing to connect to a central hub, and can allow users to select smart devices for interaction simply by pointing and speaking a command.

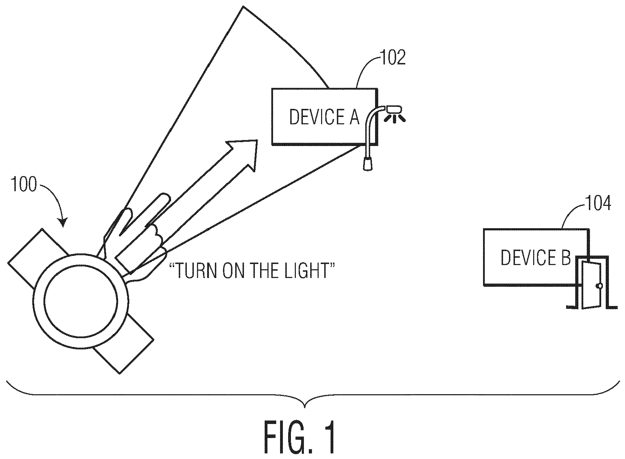

Fig. 1 illustrates how a user device 100, such as a smartwatch, can be used to control another device 102, referred to herein as a targeted device, using a combination of a voice command and UWB localization technology. In the example illustrated in Fig. 1, the operation involves turning on a UWB-enabled light fixture that is visible to the user. At a high-level and from the perspective of the person that is wearing the smartwatch, the process involves triggering a point-command operation, pointing at the targeted device, and then speaking a command to be executed, such as "turn on the light," or "unlock the door." The desired operation is executed by the user in an intuitive manner with very few specialized skills or knowledge required. From the perspective of the smartwatch, the process involves triggering a point-command operation in response to an input to a user device from a user of the user device, pairing with a targeted device after the point-command operation is triggered, wherein pairing with the targeted device involves determining that the user device is pointed at the targeted device based on an AoA of UWB pings that are received from the targeted device on the UWB antennas of the user device, interpreting a user generated point-command that is received at the user device from the user to produce a machine readable point-command, wherein the user generated point-command is interpreted at least in part based on the pairing with the targeted device, and transmitting the machine readable point-command from the user device to the targeted device via a wireless signal.

From the perspective of the targeted device, the operation involves sending UWB pings, participating in a pairing operation with the smartwatch, and then executing a command that is received at the targeted device from the smartwatch via a wireless signal.

In the example of Fig. 1, UWB localization technology is leveraged by the smartwatch 100 to identify the device that the user is pointing at, which is the device that the user intends to control. For example, while there may be UWB pings being received from multiple UWB-enabled devices 102 and 104 within range of the smartwatch, the smartwatch is able to decipher the intention, or pointing, of the user via UWB enabled angle-of-arrival (AoA) estimation. The combination of the UWB-enabled pairing of the smartwatch with the targeted device and the spoken command of the user provides a technology for controlling wireless devices that heretofore has not existed. Additionally, by implementing the device pairing and command recognition at the smartwatch, device control capabilities can be implemented with limited computing resources at the targeted device.

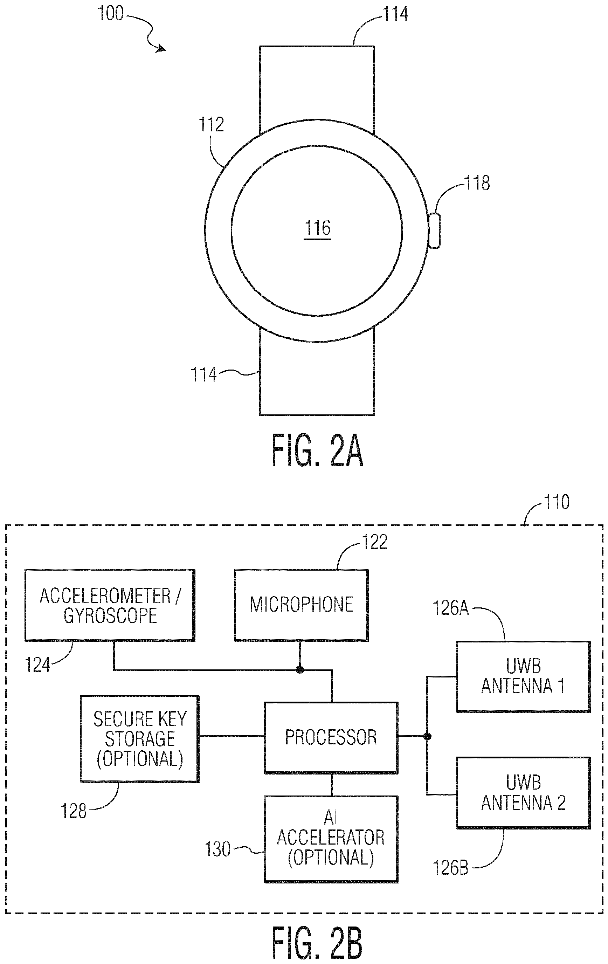

In an embodiment, the technology for controlling a wireless device is implemented at least in part from a wearable computing device such as a smartwatch. Fig. 2A is an example of a smartwatch 100 and Fig. 2B is a functional block diagram of electronic components 110 of the smartwatch. With reference to Fig. 2A, the smartwatch includes a case 112 and a strap 114 as is known in the field. The case has a display 116 and a crown 118 and may include other elements or components. With reference to Fig. 2B, the electronic components include a processor 120, a microphone 122, an accelerometer/gyroscope 124, and two UWB antennas 126A and 126B. The electronic components may include other components, including for example, a secure key storage 128, an artificial intelligence (AI) accelerator 130, and a haptic device (e.g., a device that can generate haptic feedback to the person wearing the smartwatch). The processor 120 may include processing circuitry and memory. In an embodiment, the processor is a microcontroller. The processor may include an on-chip or off-chip UWB radio and/or an on-chip or off-chip non-UWB radio. The microphone 122 may be a microphone as is known in the field. The accelerometer/gyroscope 124 (or other inertial measurement unit (IMU)) may be an accelerometer and/or a gyroscope as is known in the field. The UWB antennas 126A and 126B may be RF antennas that are configured to transmit and receive UWB signals, e.g., electromagnetic energy in the frequency range of 3 - 10 GHz. The secure key storage 128 may include secure memory as is known in the field. The AI accelerator 130 may includes circuits, memory, and/or computer-readable instructions and data that are configured to implement AI/machine learning (ML) models.

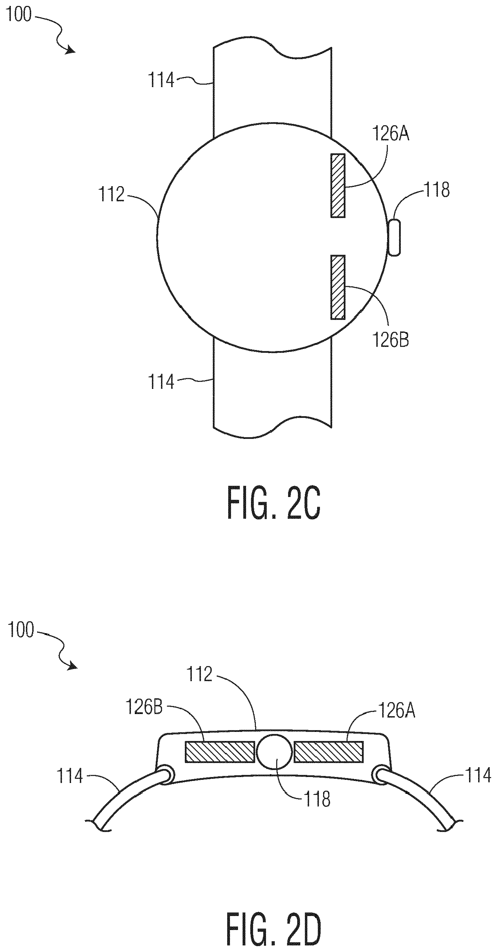

Fig. 2C depicts a top view of the smartwatch 100 that shows example locations of the two UWB antennas 126A and 126B within the case 112. Fig. 2D depicts a side view of the smartwatch that shows the locations of the same two UWB antennas within the case from a side perspective. As shown in Figs. 2C and 2D, the UWB antennas are physically separated from each other so that AoA estimates can be made. For example, the two UWB antennas may be separated from each other by a known distance of, for example, λ/2, where λ is the wavelength of the UWB pings. Additionally, the two UWB antennas are positioned within the case to enable UWB AoA estimates in a pointing zone that projects in the same direction as, for example, a pointed finger of the same wrist/hand on which the smartwatch is worn.

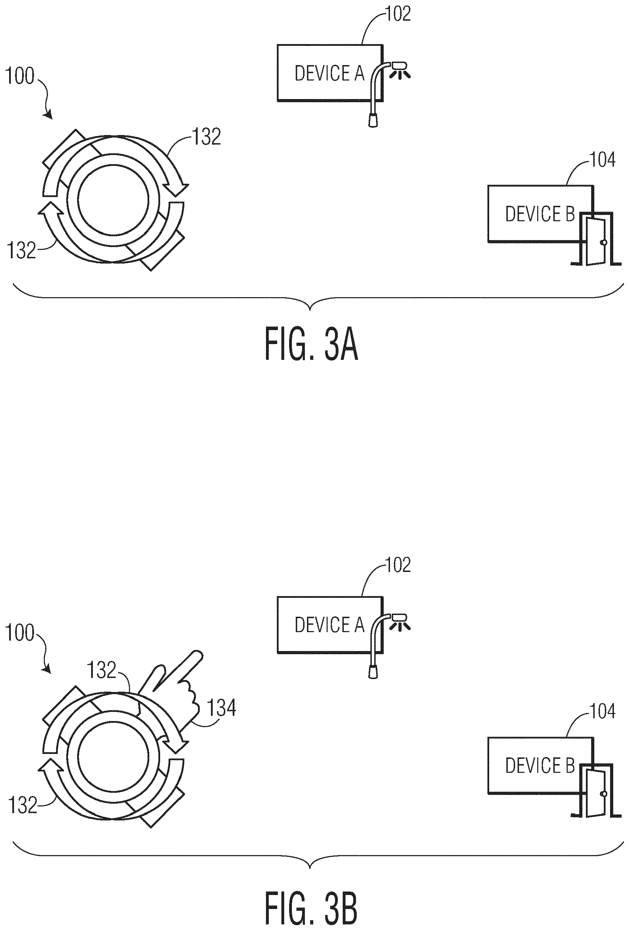

An operation of a user that is wearing a smartwatch turning on a UWB-enabled light fixture via a voice command to the smartwatch is now described with reference to Figs. 3A - 9. In general, the process of turning on the light fixture is referred to as a point-command operation because the operation involves the user pointing to the targeted device and issuing a command, referred to herein as a point-command, to control the targeted device. Typically, the point-command is a verbal command that is spoken by the user while pointing at the targeted device.

A first step of the point-command operation involves the user triggering the point-command operation by providing some user input to the smartwatch. For example, the user provides a "twist" input to the smartwatch that is a preconfigured input that is sensed by the accelerometer and converted to a signal that triggers a point-command operation. Fig. 3A illustrates an input to the smartwatch 200 that is implemented by twisting the wrist on which the smartwatch is worn. In particular, the twisting of the smartwatch is illustrated by curved arrows 132. In an embodiment, the accelerometer (Fig. 2B, 124) in the smartwatch detects the twist of the smartwatch and outputs a signal that triggers the point-command operation in response to detecting the twist. Although a physical movement is provided as the user input, in other embodiments, other user inputs such as voice or a touch input may be used to trigger the point-command operation. In an embodiment, a first aspect of the point-command operation that is triggered by the user input involves wirelessly transmitting a query signal that can be detected by devices within range that are equipped with compatible wireless technology. For example, the smartwatch may transmit a query signal via a wireless technology such as Bluetooth low energy, BLE, that can be detected by compatibly equipped devices that are within range of the query signal.

In the example of Fig. 3A, the user input to trigger the point-command operation (e.g., the wrist twist) is implemented before the user points to the targeted device and/or before the user has spoken a point-command. Fig. 3B illustrates a twist input (e.g., as indicated by curved arrows 132) to the smartwatch 100 that is implemented simultaneous with the user's hand 134 pointing at the targeted device. In the example of Fig. 3B, the input also triggers the point-command operation.

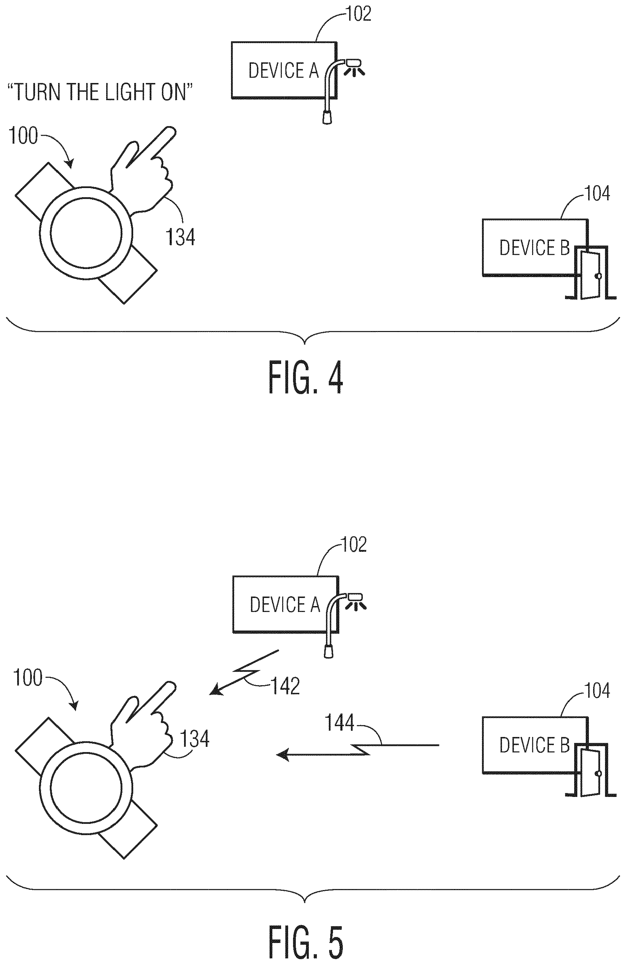

Once the point-command operation is triggered (e.g., by the input from the user), the user is free to issue a point-command, referred to herein as a user generated point-command. In an embodiment, the user is expected to issue the user generated point-command while the user is pointing at the targeted device. For example, the user issues a point-command by speaking the command "turn on the light" while the user is pointing at the targeted light fixture. The spoken user-generated point-command is picked up by the microphone 122 of the smartwatch and converted to digital signals that can be processed within the smartwatch. Fig. 4 illustrates the user's hand 134 pointing at a targeted device 102 (e.g., a light fixture), by pointing a finger at the light fixture, in which the finger is of the hand and corresponding wrist on which the smartwatch is worn.

In response to the point-command operation being triggered, the smartwatch begins a pairing operation that involves transmitting a query signal (or multiple query signals) that can be received by devices that are within range of the query signal. In an embodiment, a query signal includes generic UWB "beacon" or "blink" signals or encrypted UWB blink signals. In response to receiving the query signal, the nearby devices enter a UWB ping mode, and begin to announce themselves by transmitting UWB pings, also referred to as UWB pulses. For example, the nearby devices transmit UWB pings at specific known intervals of, for example, 0.1 - 10 hertz. In addition, the UWB-enabled devices may transmit announcements via another wireless channel such as BLE. The UWB pings enable the smartwatch to perform localization operations, e.g., ranging and AoA estimations and the announcements include device-specific information such as a device ID, device type, and/or authentication information.

Fig. 5 illustrates the UWB-enabled devices 102 and 104 that are nearby to the smartwatch 100 transmitting UWB pings 142 and 144 as part of the pairing operation. The UWB pings enable UWB-based localization, e.g., ranging and AoA estimates. The smartwatch may also transmit information that may include device-specific information such as a device ID and/or an indication of the device type. In an embodiment, the UWB-enabled devices include a UWB radio to transmit UWB pings and may include some other wireless communications component, e.g., a non-UWB radio, such as a BLE transceiver, to transmit device-specific information such as a device ID, device type, and/or authentication information. Additionally, the UWB-enabled devices may include a component (such as a microcontroller) that can process received commands to control some aspect of the UWB-enabled device, e.g., to turn on/off a light fixture, to lock/unlock a door, and/or to open/close the door.

The smartwatch receives the UWB pings from the nearby UWB-enabled devices and performs UWB AoA estimations to determine which device the user is pointing at. For example, the smartwatch can make UWB AoA estimates based on the phase difference between signals received on the two UWB antennas of the smartwatch using AoA techniques as are known in the field.

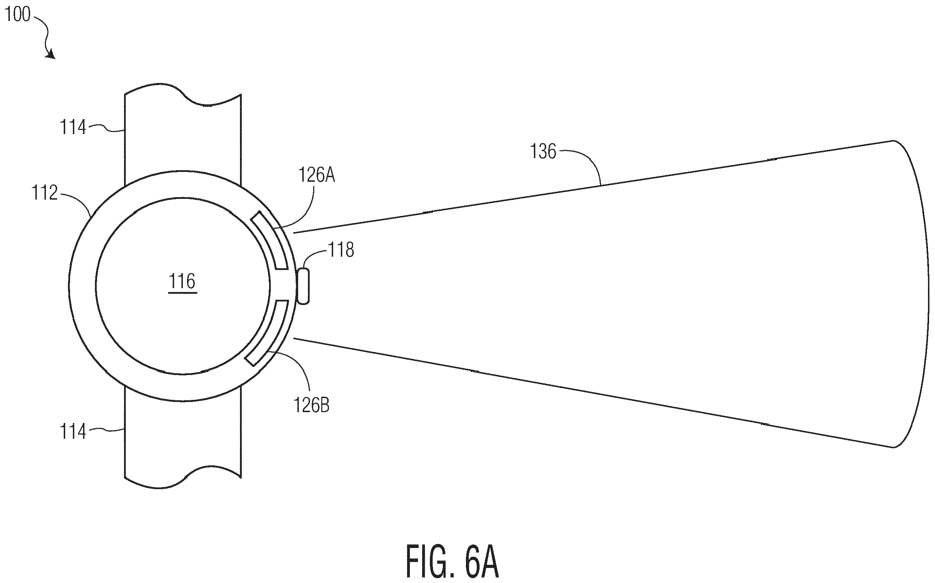

In an embodiment, the smartwatch is configured with a pre-established pointing zone that is aligned relative to an arm/wrist (e.g., right arm/wrist or left arm/wrist) on which the smartwatch is worn. Fig. 6A illustrates an example of a pointing zone 136 for a smartwatch 100 that is to be worn on the left arm/wrist of the user. The pointing zone projects from the smartwatch in a direction that is in line with the typical direction of a pointed finger on the left-hand. Fig. 6A illustrates a pointing zone of the smartwatch relative to two UWB antennas 126A and 126B that are located within the case 112 of the smartwatch. In the example of Fig. 6A, the pointing zone is shown in two dimensions (2D) but in some embodiments the pointing zone is a three dimensional (3D) zone, such as a cone that expands out from the smartwatch. Although the pointing zone is illustrated as having a cone shape, the pointing zone may have a different shape such as cylindrical, or rectangular. Additionally, the shape and/or size of the pointing zone may be configurable. For example, vibration covariance from an IMU of the user device could be used to calculate a narrower pointing zone based on user hand stability.

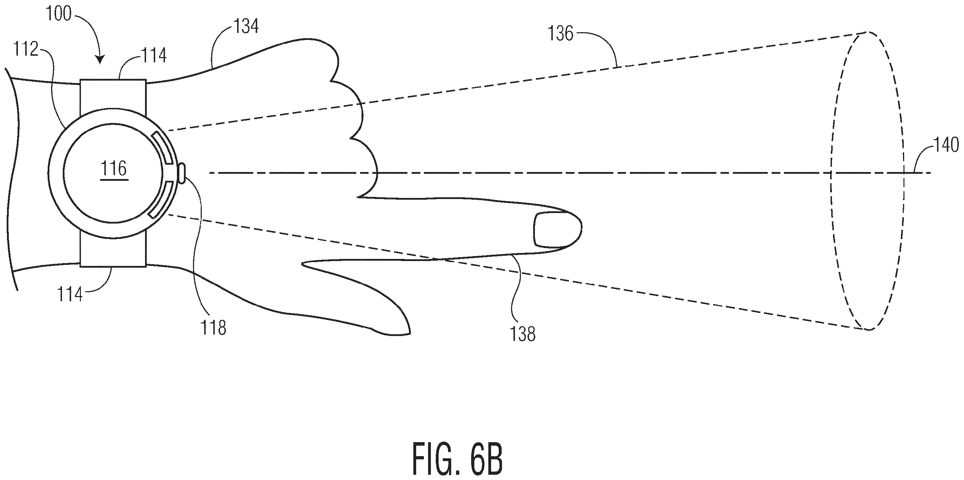

Fig. 6B illustrates a pre-established pointing zone 136 of the smartwatch 100 relative to the left hand 134 of a user in which the user is pointing with the index finger 138 of the left hand. As illustrated in Fig. 6B, the pointing zone is directionally aligned with a pointed finger. For example, a straight-line projection from the finger is aligned with a centerline 140 of a cone that projects out from the smartwatch. Although an example of a pointing zone with a cone shape is illustrated in Fig. 6B, the pointing zone may have other shapes that are aligned with a pointing direction of a finger. In another embodiment, the user may point the hand in an open state or in a fist state and the pointing zone aligns with a straight-line projection that runs along the forearm and through the hand of the user. Other configurations of a pointing zone with reference to a smartwatch are possible.

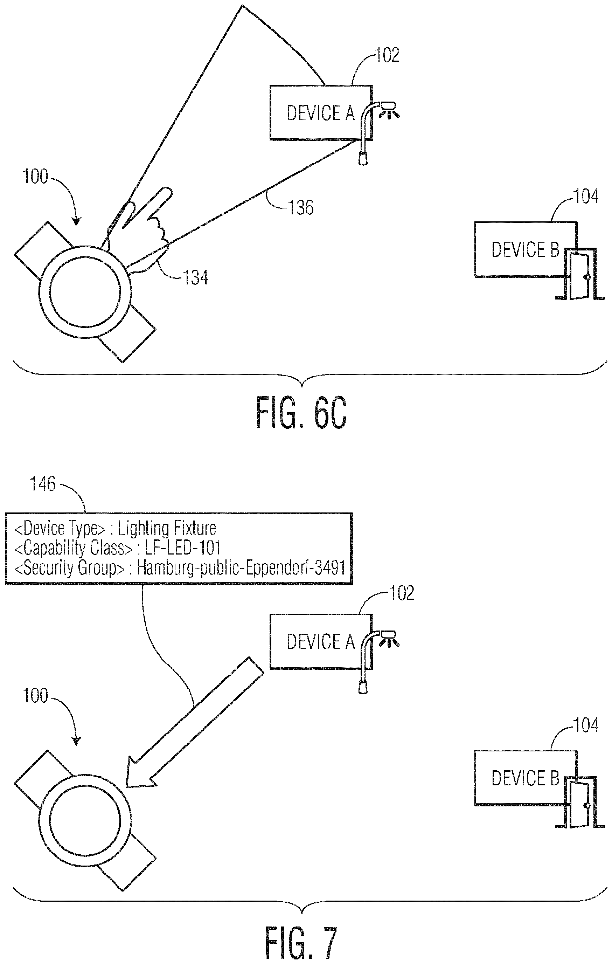

Given a pre-established pointing zone 136 as described with reference to Figs. 6A and 6B and UWB AoA estimates based on UWB pings from nearby devices, the smartwatch 100 is able to determine whether the smartwatch is pointed at a particular one of the nearby UWB-enabled devices. Fig. 6C illustrates that device A 102 (e.g., a light fixture) is located within the pointing zone 136 of the smartwatch. Based on the device-specific information (e.g., device ID and/or device type) and the UWB AoA estimates, the smartwatch can determine which device the user is pointing at. In the example of Fig. 6C, the smartwatch determines that the user is pointing at device A (also referred to as the targeted device). In an example embodiment, logic implemented by the smartwatch with regard to deciphering the pointing intention of the user can be expressed as:
If AoA of device is within pointing zone, then pointed at = YES;
If AoA of device is not within pointing zone, then pointed at = NO.

Other criteria can be used to determine if the smartwatch is pointed at a particular UWB-enabled device. For example, the determination may be made based on a comparison of the AoA to a pointing centerline. Such logic can be expressed as:
If AoA of device is ≤ n degrees from the centerline, then pointed at = YES;
If AoA of device is > n degrees from centerline, then pointed at = NO;
where n is an integer of, for example, 0 ≤ n ≤ 90.

In another embodiment, IMU dead reckoning could be used, in conjunction with UWB reference measurements, to estimate pointing direction.

Once the smartwatch has determined that the smartwatch is pointed at a particular UWB-enabled device, the pairing process may be considered complete although the pairing process may include additional operations. For example, the pairing process may include an authentication process between the smartwatch and the UWB-enabled device.

Once the smartwatch has paired with the targeted device, the smartwatch interprets the point-command that was issued by the user and received at the smartwatch at least in part based on the pairing with the targeted device. The user generated point-command is interpreted by the smartwatch to produce a machine-readable point-command. In an embodiment, the smartwatch uses some information that is learned about the targeted device to generate the machine-readable point-command from the user generated point-command. For example, the smartwatch interprets the user generated point-command of "turn on the light," in view of the knowledge that the targeted device has a device type of light fixture. Fig. 7 illustrates device-specific information 146 that is transmitted from the targeted device 102 (e.g., via BLE) and received at the smartwatch 100 after the smartwatch is paired with the targeted device. Alternatively, such device-specific information may be provided to the smartwatch by the UWB-enabled device as part of, and/or during, the pairing process. In the example of Fig. 7, the device-specific information includes device type, capability class, and security group although other device-specific information is possible. As shown in Fig. 7, the device-specific information is:
<Device Type>: Lighting Fixture
<Capability Class>: LF-LED-101
<Security Group>: Hamburg-public-Eppendorf-3491

Knowing that the targeted device is a light fixture, the smartwatch can apply a specific set of rules to the user generated point-command to produce the machine-readable point-command. For example, the smartphone may apply a set of device-specific rules to interpret the user-generated point-command to produce the machine-readable point-command. In an embodiment, the learned device type may be especially valuable in properly deciphering a user-generated point-command in that a command to "turn on the light" or "turn on the lights" may be interpreted very differently when the device is a light fixture in a building versus when the device is a set of headlights in an automobile. In an embodiment the type of device or "device type" is label associated with the device that corresponds to some known functionality and/or capability of the device. For example, a device type of "light fixture" corresponds to a certain set of functionality that is associated with a light fixture (e.g., on/off, intensity, timer, etc.) while a device type of "door" corresponds to a different set of functionality that is associated with a door (e.g., lock/unlock and/or open/close). A wide range of devices types can be controlled using a point-command operation as described herein.

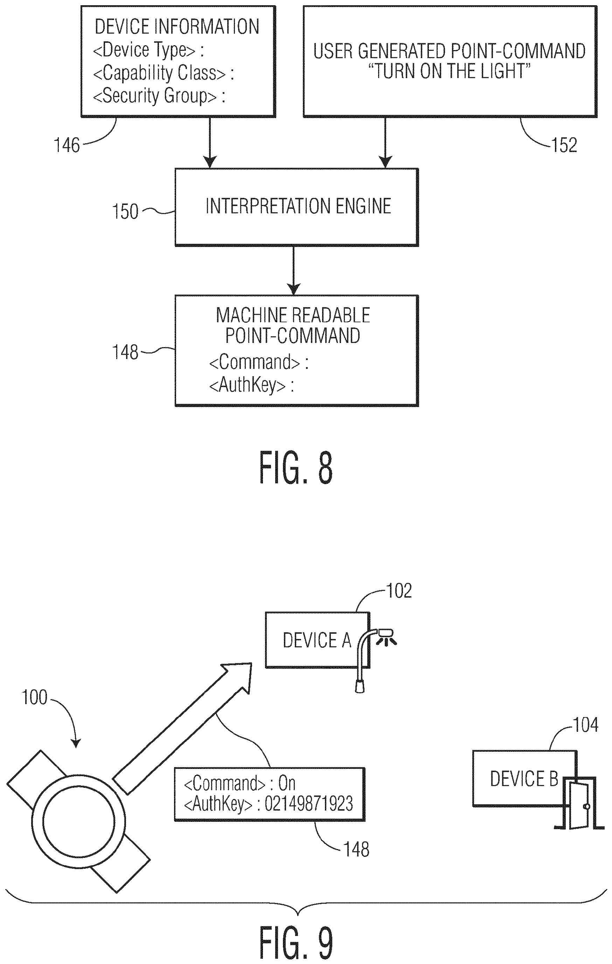

Fig. 8 depicts a process for producing a machine-readable point-command from a user generated point-command and from device-specific information that corresponds to the targeted device that is being pointed at by the wearer of the smartwatch. As illustrated in Fig. 8, an interpretation engine 150 of the smartwatch receives a user generated point-command 152 and device-specific information 146 and produces a machine-readable point-command 148. In an embodiment, the interpretation engine uses natural language processing (NPL) to decipher the spoken user generated point-command of "turn on the light." Based on the user generated point-command and the device-specific information, the interpretation engine produces a machine-readable point-command (e.g., a machine-readable command that can be understood by the targeted device) to turn on the light. In the example of Fig. 8, the machine-readable point-command includes:
<Command>: ON
<AuthKey>: 02149871923
In the example of Fig. 8, the interpretation engine 150 uses the device type information to produce the "<Command>: ON" portion of the machine-readable point-command in response to the user-generated point-command and the interpretation engine uses the security group information to produce the "<AuthKey>: 02149871923" portion of the machine-readable point-command. In an embodiment, the interpretation engine is implemented at least in part by the processor 120 and/or the AI accelerator 130 of the smartwatch 100.

Fig. 9 illustrates the machine-readable point-command 148 being wirelessly transmitted from the smartwatch 100 to the targeted device 102. In an embodiment, the machine-readable point-command is transmitted to the target device via BLE, although in other embodiments, the machine-readable point-command is transmitted to the targeted device via a different wireless technology, such as UWB.

In an embodiment, the operations described with reference to Figs. 4 - 9 all happen while the user is pointing at the targeted device and shortly after the point-command operation is triggered. In one example implementation, it is envisioned that a point-command operation executed by a user involves: 1) the user seeing a targeted light fixture, 2) the user twisting their wrist (the wrist with the smartwatch on it) to trigger the point-command operation, 3) the user pointing at the light fixture, e.g., with a finger/hand that is the same as the wrist on which the smartwatch is worn, and 4) the user speaking the command "turn on the light." Upon speaking the command "turn on the light," the pointed at light fixture would turn on within a very short period of time, e.g., within one second.

In an embodiment, the point-command operation is directed towards a UWB-enabled light fixture but in other embodiment, the point-command operation may be directed towards a UWB-enable light switch that controls a corresponding light fixture. Further, the particular type of UWB-enabled device or the particular function that is controlled through the point-command operation is implementation specific.

In an embodiment, the point-command operation includes some authentication process. For example, an authentication process may involve keys being exchanged between the user device and the target device (using an in-band channel and/or an out-of-band channel) to ensure that the user device has the necessary certification to implement the desired point-command operation. In another example, an authentication authority (e.g., cloud server/IoT home node/vendor) could provide both devices with the necessary certification to implement the desired point-command operation.

In an embodiment, a machine leaming/artificial intelligence engine is selected to process user-generated point-commands based on the pairing between the smartwatch and the UWB-enabled device. For example, a trained machine learning/artificial intelligence model can be selected based on the type of UWB-enabled device that the smartwatch is paired with. Such a device-based selection process can result in selecting an NLP model that improves command recognition and may reduce power consumption.

In an embodiment, a command library that is utilized by the smartwatch to control a UWB-enabled device may be selected based on information about the paired UWB-enabled device. For example, an interpretation engine of the smartwatch may access a first command interpretation library when the UWB-enabled device is a light fixture (or light switch) and may access a second command interpretation library when the UWB-enabled device is a door (or door lock). Using device-specific command libraries that are dynamically selected based on the pointed at device can improve the speed and accuracy of producing machine-readable point-commands from the user generated point-commands.

As described above, the smartwatch uses UWB AoA estimates in the pairing process, e.g., to determine which device the user is pointing at. In some cases, multiple devices may be close enough to each other that UWB AoA estimates do not have enough resolution to enable the smartwatch to distinguish between two devices. For example, it may be difficult to distinguish between two devices that are both within a pre-established pointing zone of the smartwatch.

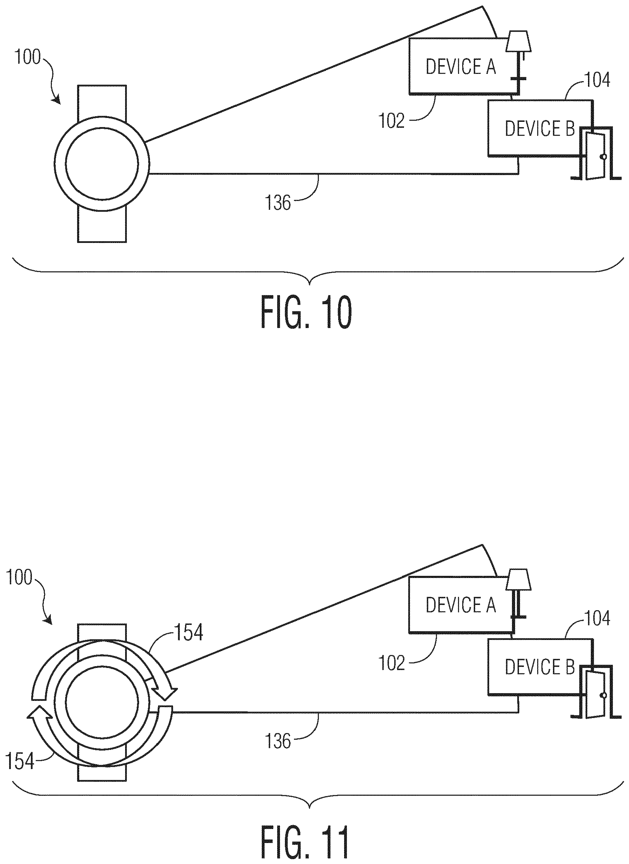

Fig. 10 illustrates two UWB-enabled devices 102 and 104 (e.g., a light fixture and a door) that are both within the pointing zone 136 of a smartwatch 100. In a case such as that shown in Fig. 10, it may be difficult for the smartwatch to determine the intent of the user (e.g., to determine which device the user is intending to point to) from the UWB AoA estimates alone.

In an embodiment, a technique for selecting a particular device from two or more possible devices involves a selection process that is executed by the user interacting with the smartwatch. In one embodiment, the user is presented by the smartwatch with visual or audio selection options while the user is still pointing in the same direction. For example, the smartwatch displays a graphic of a light fixture or audibly outputs the word "light" and then the smartwatch waits for a user input of either YES or NO (could be a spoken input or some other type of input). If the user input is YES, then the smartwatch pairs with the light fixture. If the user input is NO, then the smartwatch watch displays a graphic of the next device in the pointing zone, e.g., the smartwatch displays a graphic of a door or audibly outputs the word "door" and then waits for a user input of either YES or NO (could be a spoken input or some other type of input). If the user input is YES, then the smartwatch pairs with the door and if the user input is NO, then the smartwatch searches for another device or ends the operation.

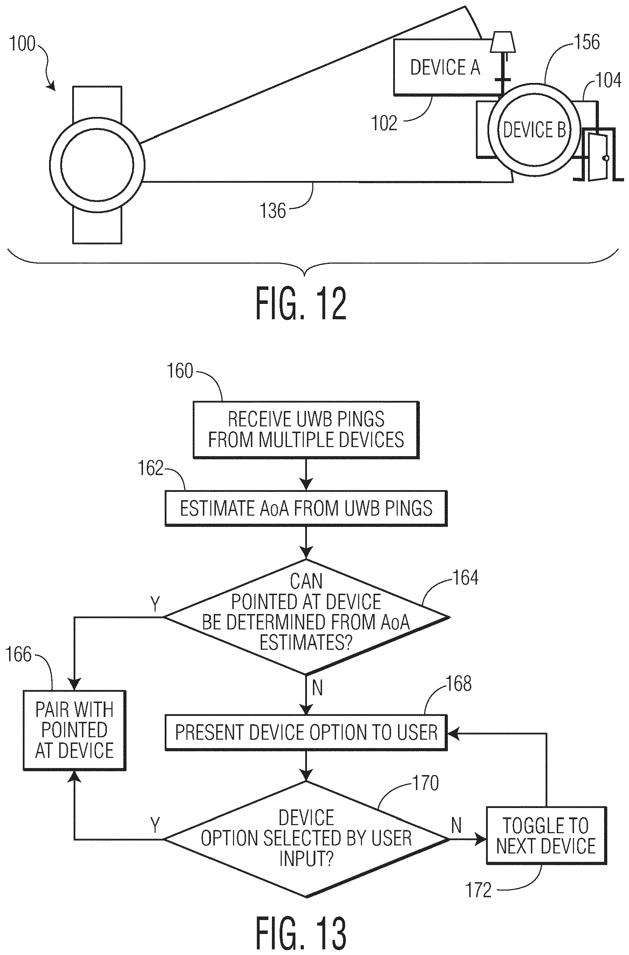

Fig. 11 illustrates a user input, such as a wrist twist (as indicated by arrows 154), that allows the user to toggle through the two UWB-enabled devices 102 and 104 that are within the pointing zone 136. In an embodiment, the smartwatch provides a first audible output of "light" and waits for a user input to indicate the intent of the user's pointing, e.g., is the user intending to point at the light fixture. If the user intends to point at the light fixture, then the user may indicate as much by some user input, e.g., a verbal "yes" or a gesture such as a counter-clockwise twist of the wrist. However, if the user intends to point to the door, the user may make a gesture such as twisting the wrist clockwise, which causes the smartwatch to provide a second audible output of "door." If the user intends to point at the door, the user may indicate as much by some user input, e.g., a verbal "yes," or a gesture such as a counter-clockwise twist of the wrist. Fig. 12 illustrates that the user has toggled from the light fixture 102 (device A) to the door 104 (device B) and selected the door (as indicated by ring 156) as the device that the user is pointing at and intends to control. Although an example of a device selection operation is described, other techniques for deciphering the intent of a user pointing are possible. For example, one technique may involve toggling through light indicators on the UWB-enabled devices that are coordinated with the smartwatch until the user indicates the intended target of the pointing device.

Fig. 13 is a process flow diagram of example logic that is implemented by the smartwatch to decipher the intent of a user's pointing when multiple UWB-enabled devices are within the same pointing zone. At block 160, the smartwatch receives UWB pings from multiple UWB-enabled devices. At block 162, the smartwatch estimates the angle-of-arrival (AoA) of the UWB-enabled devices from the UWB pings. At decision point 164, the smartwatch determines if the pointed at device can be determined from the AoA estimates. In an embodiment, the smartwatch can only determine that a particular UWB-enabled device is being pointed at if there is only one UWB-enabled device within the pre-established pointing zone (as determined by their corresponding AoA estimates). In another embodiment, the smartwatch can determine that a particular UWB-enabled device is being pointed at if that particular device is closer to a pointing centerline than any other UWB-enabled device (as determined by their corresponding AoA estimates). In another embodiment, IMU dead reckoning could be used, in conjunction with UWB reference measurements, to estimate pointing direction. If at decision point 164, the pointed at device can be determined from the AoA estimates, then the process proceeds to block 166, and the pointed at device is paired with the smartwatch. If, however, at decision point 164, the pointed at device cannot be determined from the AoA estimates, then the process proceeds to block 168, where a device option is presented to the user. For example, the device option may be presented to the user through a user interface of the smartwatch (e.g., through an audible output of "light" or through a display of a light on the display of the smartwatch) as described above. Upon presenting a first device option to the user, the smartwatch determines whether or not the presented device option is selected by the user, e.g., by receiving a corresponding user input. If the presented device is selected by the user (e.g., as confirmed through a user input to the smartwatch) at decision point 170, then the process proceeds to block 166, and the pointed at device is paired with the smartwatch. If, however, at decision point 170, the presented device option is not selected by the user, then the process proceeds to block 172, and the smartwatch toggles to a next one of the UWB-enabled devices for which UWB pings were received. After the smartwatch has toggled to the next UWB-enabled device, the process proceeds back to block 168, at which the next device option is presented to the user. This "selection loop" can continue until the user is presented with the UWB-enable device that the user is pointing to (e.g., the UWB-enabled device that the user intends to control), at which point the user selects the presented device and the process proceeds to block 166, where the pointed at device is paired with the smartwatch.

In an embodiment, the number of devices that are included in the "selection loop" may be reduced based on some criteria. For example, the interpretation engine may be able to remove some of the UWB-enabled devices that are within the pointing zone from the "selection loop" if some aspect of the user-generated point-command does not match some aspect of the device-specific information. For example, if a UWB-enabled device within the pointing zone is identified as a door (or door lock) and the user-generated point-command is "turn on the light," the interpretation engine may remove the UWB-enabled device that is a door from the UWB-enabled devices included in the selection loop. In another example, it may be possible to exclude any devices that that the user in not authorized to control from any selection loop operation. Thus, if the user is not authorized to unlock a particular door, the door may be excluded from the selection loop by the smartwatch. Although some examples are provided for excluding a device from a set of possible pointed at devices, other criteria are possible.

Although the user device is described as being a smartwatch, the user device could be some other computing device, such as some other wearable computing device and/or some other handheld computing device (e.g., a smartphone).

In addition to the point-command operation, a UWB-enabled smartwatch and a UWB-enabled device may be used to implement a guidance system based on UWB ranging and AoA estimates in which a user is guided to the location of the UWB-enabled device. For example, the wearer of a UWB-enabled smartwatch may be able to have their hand haptically guided to the location of a UWB-enabled light switch in a dark or room or if the wearer of the smartwatch is visually impaired.

For example, vibrations from the smartwatch may be used to guide a person's hand towards a point of interest such as a switch, handle, button, etc., in unfamiliar environments using UWB tracking for localizing the wrist relative to the targeted device. This can help a user in conditions with impaired vision or with permanently limited eyesight.

Navigating unfamiliar rooms, plane cabins, and public venues can be a challenge especially when attention is focused on other tasks or when experiencing sensory impairments. Sometimes it would be nice if someone could just take the person by the hand and guides the person to a light switch in a dark room. As disclosed herein, UWB localization on a smartwatch can be used for local scene navigation, guiding the hand towards important features such as door handles at home, work items in the factory, or the handhold on a train. Direction indications can be given by haptic cues, with optional support from audible or visible cues.

In an embodiment, the technique uses UWB triangulation for coarse self-localization of the UWB-enabled device and additional UWB AoA information to guide grasping or locating objects on close distance. The system could be integrated in a wrist-worn smartwatch (though there may be options for other formfactors). The system fuses data coming from the UWB localization, the gyroscope, and/or the accelerometer to track the current position, smartwatch orientation and user state. An implementation involves guiding a user's hand precisely to positions in space, where the final approach for grasping might be supported by a UWB-enabled device (or UWB-enabled devices) providing directional guidance as the hand approaches the targeted device. In an embodiment, haptic feedback is used to guide the hand using differentiated vibration patterns.

The user interface is embedded in a smartwatch or similar wrist-mounted device. In an embodiment, the smartwatch is equipped with: multiple UWB antennas (e.g. 6-8 GHz range) to support angle-of-arrival (AoA) estimates for UWB signals; one or more elements providing haptic feedback to the wrist (e.g., vibration motors, pressure elements in strap, heating elements in strap, etc.); a sensor providing orientation data (e.g., accelerometer, gyroscope); some user interface to specify intended target and communicate options to user (e.g., voice interface, touchscreen etc.); and the room or environment is equipped with: UWB-enabled devices (e.g., UWB anchor points) to support coarse UWB localization of the smartwatch; specific points of interest (POI), e.g., light switches, are equipped with: a UWB-enabled device (e.g., a UWB beacon) sending out a signal. These UWB-enabled devices (e.g., UWB beacons) might optionally also transmit additional information describing the associated point of interest (e.g., "Stovetop - Warning! Hot surface!").

The smartwatch may query either a central directory for available local points of interest or listen to local UWB beacons advertising such points. The user may access the resulting list of nearby POIs and request guidance to any point. The smartwatch then computes a path to the requested point. If available, knowledge of the room/environment may be used to route around obstacles.

Once a viable path is found, the device guides the user by haptic feedback applied at the wrist. The UWB anchors are used to compute the current location in the local space. Additional spoken or acoustic cues might be provided. Once the user is within grasping range of the desired POI, the system indicates to stop walking.

In an embodiment, for grasp guidance, the smartwatch locks onto the UWB beacon embedded in the POI and uses AoA estimates paired with distance data to compute wrist location and orientation relative to the target. Additional data from sensors in the smartwatch may be used to supplement the AoA and distance data. Haptic and optional acoustic feedback may be used to guide the hand towards the UWB beacon. The feedback takes the current orientation and trajectory of the device into account, for example, like guiding an airplane down the glidepath to the runway.

Sometime before contact (e.g., 5 cm from contact), the smartwatch indicates the upcoming contact to the user (e.g., to avoid stubbing fingertips). The exact distance might depend on the use case and precision of the UWB localization.

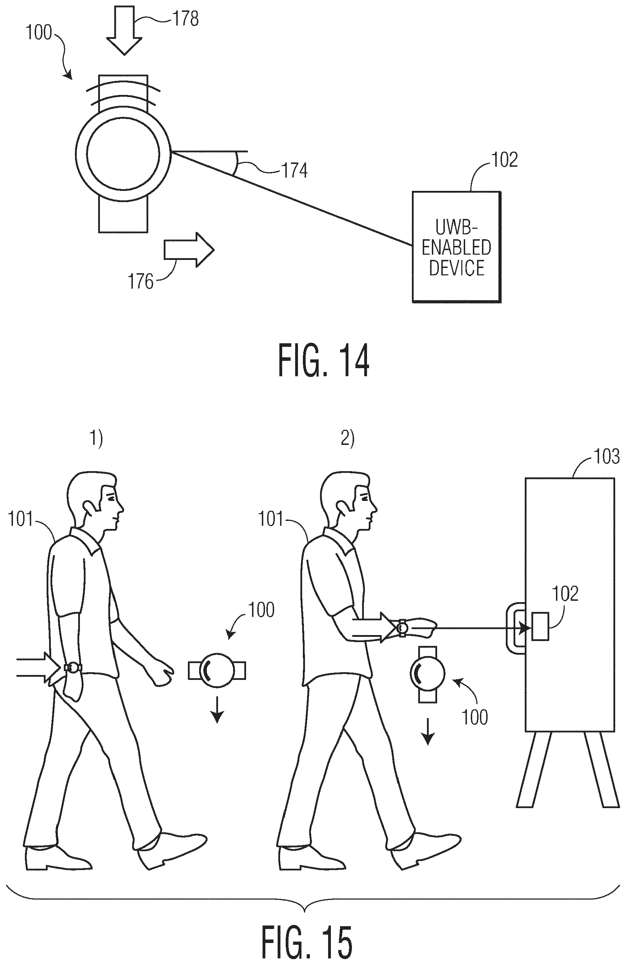

Fig. 14 illustrates a smartwatch 100 as described above relative to a UWB-enabled device 102 in which the AoA 174 between the smartwatch and the UWB-enabled device is shown. In the example of Fig. 14, the user is moving towards the UWB-enabled device (as indicated by arrow 176) but the smartwatch/hand is too far above the UWB-enabled device so a correction impulse (e.g., a haptic input from a haptic device such as a vibration at an upper portion of the smartwatch) is output from the smartwatch that indicates to the user to raise their hand.

At any point in the guidance process, sensor data on the orientation of the wrist can be used to adjust the direction of the haptic feedback. If the arm is hanging down loosely by the side, it might be desirable to "push" from the direction of the little finger to get the user to step forward. If, however the hand is raised in anticipation of grasping something, it might be desirable to push along the axis connecting elbow and hand to get a user to move forward. Haptic feedback should be aligned to the device and wrist orientation. Exact patterning of haptic feedback is application dependent.

Fig. 15 depicts two phases of a journey of a user 101 towards a POI such as the handle of a refrigerator (e.g., a device 103 that includes a UWB-enabled device 102 embedded in the handle), in which the haptic feedback from the smartwatch is adjusted depending on smartwatch orientation (taken from accelerometer or gyroscope). In phase 1, the wrist hangs down, so haptic feedback pushes the user along from the "top" of the smartwatch. In phase 2, the user has raised its hand, changing the orientation of the watch relative to the beacon. So, the haptic feedback is adjusted accordingly, pushing the user along the axis of the elbow-wrist connection.

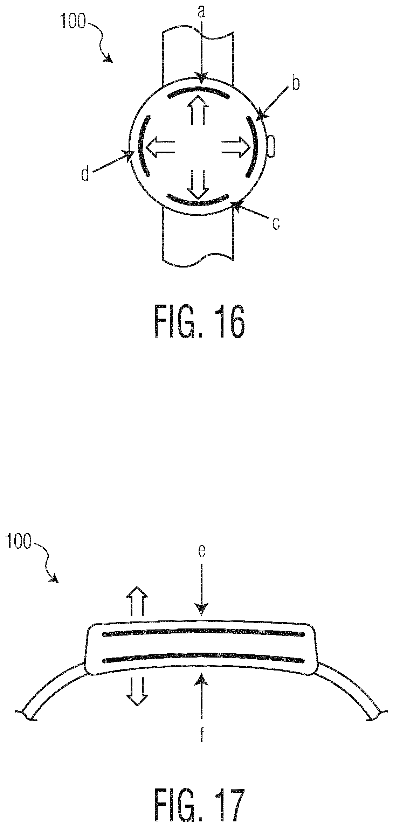

Figs. 16 and 17 illustrate directional haptic indicators that can be produced by the smartwatch 100. In particular, Fig. 16 is a top view of a smartwatch that illustrates directional haptic indicators (a, b, c, d) in a plane that is coplanar with the main surface of the crown of the watch, e.g., coplanar with the display of the smartwatch. Fig. 17 is a side view of the smartwatch that illustrates directional haptic indicators (e and f) that project orthogonally away from the top surface of the crown of the smartwatch and orthogonally away from the bottom surface of the crown of the smartwatch. The directional haptic indicators can be used to influence the direction of the user depending on the orientation of the smartwatch at that moment.

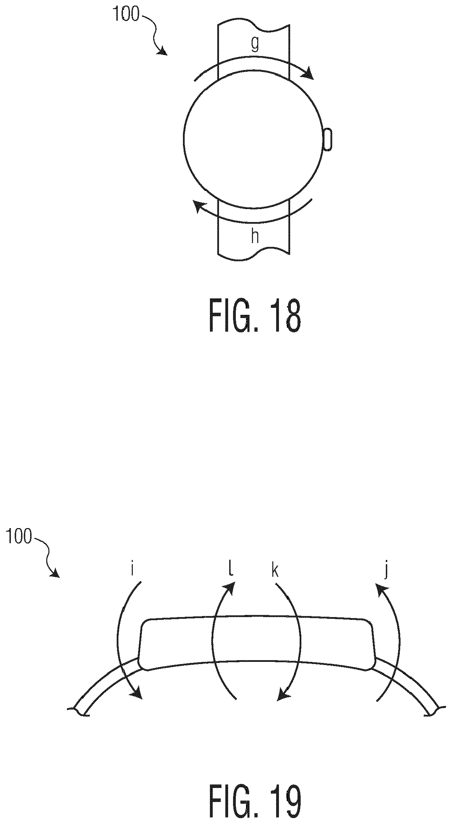

Figs. 18 and 19 illustrate orientation haptic indicators that can be produced by the smartwatch 100. In particular, Fig. 18 is a top view of a smartwatch that illustrates orientation haptic indicators (g and h) in a plane that is coplanar with the main surface of the crown of the watch, e.g., coplanar with the display of the smartwatch. Fig. 19 is a side view of the smartwatch that illustrates orientation haptic indicators (i, j, k, l) that project rotationally around the crown of the smartwatch. The orientation haptic indicators can be used to influence the orientation of the user's arm/wrist/hand.

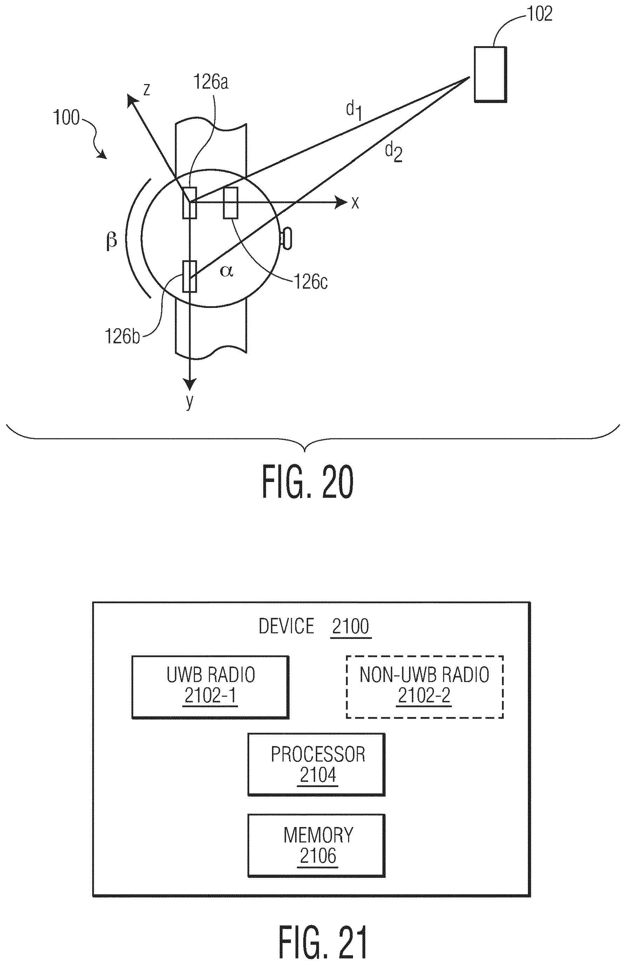

In an embodiment, the smartwatch may include more than two UWB antennas. Fig. 20 illustrates and example of a smartwatch 100 that includes three UWB-enabled antennas 126A, 126B, and 126C. Such a configuration of the smartwatch may enable three-dimensional (3D) AoA estimates, which may be used for improved grasp guidance.

The grasp guidance by AoA uses an array of UWB antennas embedded in the smartwatch and oriented to have their normal pointing along the axis connecting the elbow and the wrist. Thus, the smartwatch has an improved "forward view" as the hand approaches the POI. Since it can be assumed that the POI is not behind the person on "final approach," the antenna location also constrains the solution space for AoA computation.

In an embodiment, the UWB antennas are configured for electromagnetic energy in the 3 - 10 GHz range, although other frequency ranges are possible. In other embodiments, the UWB-enabled devices are configured to operate in a frequency range of 6 - 8.5 GHz or in a frequency range of 6 - 9 GHz.

Smartwatches can be used to issue voice commands to devices in the house (lights, appliances, shutters, etc.) or in urban environments (elevators, request pedestrian crossing, etc.). By using the smartwatch to process the commands and handle authorization, the smart devices such as lamps, kitchen appliances etc. can be built more cheaply. From the user's perspective, issuing a command to a device consists of performing an activation gesture (e.g., turning the wrist twice), pointing at the device, and speaking a command.

Determining the position of one node relative to another node often involves an AoA measurement: this means that a first node measures the angle of an incoming signal that is received by multiple antennas of said node. Based on the phase of the received signal, more specifically the difference in the phase of the signal received at different antennas, the angle of arrival is determined, and thereby the relative position of the node that transmits the signal.

UWB-enabled devices turn on a UWB Pinging mode. Devices are sending Pings at a specific interval to the user device, e.g., a wearable device such as a smartwatch. Each UWB ping is evaluated for direction and source. This allows the wearable to select which device the command is meant for.

In an embodiment, the above-described UWB-enabled devices 102 and 104 may include a UWB radio and a non-UWB radio. Fig. 21 depicts an example of a UWB-enabled device 2100 that can implement the technique for wireless point-command as described above. As shown, the device 2100 includes a UWB radio 2102-1, a processor 2104, a memory 2106, and optionally (shown by dashed box), a non-UWB radio 2102-2. The processor may include a multifunction processor and/or an application-specific processor. The memory within the device may include, for example, a storage medium such as read only memory (ROM), flash memory, random-access memory (RAM), and a large capacity permanent storage device such as a hard disk drive. The UWB radio and the non-UWB radio enable communications with other devices. For example, the UWB radio may include a UWB RF front-end antenna, such that the UWB radio may communicate with devices (e.g., payee devices, payer devices, first devices, or second devices) using a UWB wireless protocol. As another example, the non-UWB radio may include a non-UWB RF front-end antenna, such that the non-UWB radio may communicate with devices using a non-UWB wireless protocol. The device executes computer readable instructions stored in the storage medium to implement various tasks as described above. Furthermore, the device 2100 can include a computing system (not shown) that features multiple components that may be used for point-command operations as described herein.

Examples of the non-UWB wireless protocol may include, but are not limited to, Long Term Evolution (LTE), Bluetooth Low Energy (BLE), Wi-Fi, cellular, etc. In some embodiments, UWB-enabled devices are equipped with UWB components needed to communicate via the UWB wireless protocol, and are equipped with non-UWB components needed to communicate via the non-UWB wireless protocol.

A user device includes UWB antennas and a signal processing unit connected to the UWB antennas. The signal processing unit is configured to trigger a point-command operation in response to an input to the user device from a user of the user device, pair with a targeted device after the point-command operation is triggered, wherein pairing with the targeted device involves determining that the user device is pointed at the targeted device based on an AoA of UWB pings that are received from the targeted device on the UWB antennas of the user device, interpret a user generated point-command that is received at the user device from the user to produce a machine-readable point-command, wherein the user generated point-command is interpreted at least in part based on the pairing with the targeted device, and transmit the machine-readable point-command from the user device to the targeted device via a wireless signal.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, an RAM, an ROM, a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A user device comprising:
ultra-wideband (UWB) antennas; and
a signal processing unit connected to the UWB antennas and that includes processing circuitry and memory coupled to the processing circuitry, wherein the signal processing unit is configured to:
trigger a point-command operation in response to an input to the user device from a user of the user device;
pair with a targeted device after the point-command operation is triggered, wherein pairing with the targeted device involves determining that the user device is pointed at the targeted device based on an angle-of-arrival (AoA) of UWB pings that are received from the targeted device on the UWB antennas of the user device;
interpret a user generated point-command that is received at the user device from the user to produce a machine-readable point-command, wherein the user generated point-command is interpreted at least in part based on the pairing with the targeted device; and
transmit the machine-readable point-command from the user device to the targeted device via a wireless signal.

2. The user device of claim 1, wherein the user generated point-command is received at a microphone of the user device as a spoken command from the user.

3. The user device of claim 2, wherein the spoken command is received at the microphone of the user device while the user device is pointed at the targeted device.

4. The user device of any preceding claim, wherein pairing with the targeted device involves triggering the targeted device to transmit the UWB pings.

5. The user device of any preceding claim, wherein pairing with the targeted device involves determining a type of the targeted device based on a wireless communication from the targeted device.

6. The user device of any preceding claim, wherein pairing with the targeted device involves selecting the targeted device from a plurality of UWB-enabled devices that are transmitting UWB pings and that are within a pointing zone of the user device.

7. The user device of claim 6, wherein pairing with the targeted device involves toggling a user interface of the user device through the plurality of UWB-enabled devices until the targeted device is selected.

8. The user device of claim 6 or 7, wherein pairing with the targeted device involves toggling through visual indicators at the plurality of UWB-enabled devices until the targeted device is selected by the user via an input to the user device while a visual indicator is output from the targeted device.

9. The user device of any preceding claim, wherein:
pairing with the targeted device involves determining a device type of the targeted device; and
interpreting the user generated point-command involves selecting a command interpretation library in response to the device type of the targeted device.

10. The user device of claim 9, wherein the device type of the targeted device is determined based on a non-UWB wireless communication from the targeted device.

11. The user device of claim 9 or 10, wherein the command interpretation library is selected from a library of machine-learning models that are trained to predict point-commands from the user generated point-commands that are received at the user device.

12. The user device of any preceding claim, further including the user device guiding the user toward the targeted device.

13. The user device of claim 12, wherein the user device guides the user to the targeted device using AoA information and haptic feedback.

14. The user device of any preceding claim, wherein the user device is a smartwatch and a pointing zone of the smartwatch is in line with a point finger of a hand of the user, wherein the smartwatch is worn on the same wrist as the hand.

15. A method for controlling a device that is equipped with ultra-wideband (UWB), the method comprising:
triggering a point-command operation in response to an input to a user device from a user of the user device;
pairing with a targeted device after the point-command operation is triggered, wherein pairing with the targeted device involves determining that the user device is pointed at the targeted device based on an angle-of-arrival (AoA) of UWB pings that are received from the targeted device on UWB antennas of the user device;
interpreting a user generated point-command that is received at the user device from the user to produce a machine-readable point-command, wherein the user generated point-command is interpreted at least in part based on the pairing with the targeted device; and
transmitting the machine-readable point-command from the user device to the targeted device via a wireless signal.
